# FASCICULE DE BREVET EUROPEEN

(11) **EP 3 918 241 B1**
(45) Date de publication et mention de la délivrance du brevet: **09.11.2022**
(21) Numéro de dépôt: 19829268.2
(22) Date de dépôt: 12.11.2019
(51) Int. Cl.: F16L 1/16, B23K 37/053, F16L 1/20, F16L 1/12

(54) **DISPOSITIF ET PROCÉDÉ DE MISE À JOINT D'ÉLÉMENTS DE CONDUITE SOUS-MARINE POUR LE TRANSPORT DE FLUIDES**
VORRICHTUNG UND VERFAHREN ZUR VERBINDUNG VON ELEMENTEN EINES UNTERWASSERROHRS ZUM TRANSPORT VON FLÜSSIGKEITEN
DEVICE AND METHOD FOR JOINING ELEMENTS OF UNDERWATER PIPE FOR TRANSPORTING FLUIDS

(30) Priorité: 30.01.2019 FR 1900887
(43) Date de publication de la demande: 08.12.2021
(73) Titulaire: SAIPEM S.A., 78180 Montigny Le Bretonneux (FR)
(72) Inventeur: MOCERI, Liborio, 28270 Lommoye (FR)
(74) Mandataire: Cabinet Beau de Loménie
(86) Numéro de dépôt international: PCT/FR2019/052679
(87) Numéro de publication internationale: WO 2020/157391

(56) Documents cités:
- WO-A1-2016/026969
- WO-A2-2012/101232
- GB-A- 2 362 696
- US-A- 3 598 369

## Description

### Domaine Technique

La présente invention se rapporte au domaine général de la construction et de la pose de conduites sous-marines simples ou multi-enveloppes reposant au fond de la mer ou assurant la liaison fond-surface pour le transfert d'hydrocarbures, notamment de pétrole et de gaz, issus de puits de production sous-marins. Elle concerne plus particulièrement la mise à joint d'éléments de telles conduites sous-marines.

### Technique antérieure

Les conduites sous-marines pour le transfert d'hydrocarbures, notamment de pétrole et de gaz issus de puits de production sous-marins, sont généralement posées directement en mer. Typiquement, lors de la pose en mer d'une conduite sous-marine, une extrémité de la conduite posée est maintenue sur un navire de pose afin de souder une section de conduite sur cette extrémité de la conduite (on parle de mise à joint d'une section de conduite). Une fois la soudure réalisée, la conduite rallongée est descendue en mer, le navire de pose est avancé et l'opération peut être répétée pour une nouvelle section de conduite. De manière alternative, la conduite peut être déroulée à partir d'un premier touret sur lequel elle a été au préalable bobinée à terre, puis rallongée de longueurs successives à partir d'une pluralité de tourets.

Les sections de conduite sont ainsi raccordés les uns aux autres à bord d'un navire de pose et sont descendus au fond de la mer au fur et à mesure de leur raccordement. Cette pose peut s'effectuer par l'intermédiaire d'une tour de pose en J ou en S positionnée sur le navire de pose. Avec la pose en J, la conduite sous-marine est typiquement descendue du navire de pose pratiquement verticale (entre +30° et -10° par rapport à la verticale). La pose en J est une pose caténaire simple dans laquelle l'inclinaison quasi-verticale de la conduite diminue au fur et à mesure de son déplacement vers le bas jusqu'à épouser la pente du fond de la mer. Avec la pose en S, la conduite sous-marine est typiquement descendue du navire de pose pratiquement à l'horizontale et se courbe ensuite pour atteindre le fond marin

Lors de la pose, la conduite est soumise à de fortes charges de traction dues au poids de la conduite sous le navire de pose. En outre, la conduite est soumise à des charges en fatigue dues aux mouvements de la mer et du navire de pose. De plus, dans certaines applications la conduite est soumise pendant toute sa durée de vie aux courants marins, ce qui accroît davantage les contraintes de charge qu'elle subit. Pour supporter de telles contraintes et efforts, les cordons de soudure qui sont réalisés entre les différentes sections de la conduite doivent être d'une très grande qualité.

Par ailleurs, la pose de conduites sous-marines peut nécessiter la mise à joint d'autres éléments de conduite, tels que par exemple de pièces en T destinées à munir la conduite sous-marine de branches latérales typiquement utilisées pour un raccordement futur à des équipements ou des têtes de puits, ou encore d'une pièce d'extrémité qui termine la conduite sous-marine (désignée par PLET pour « pipeline end termination » en anglais).

La mise à joint d'éléments de conduite (tels que les sections de conduite, les pièces en T ou les pièces d'extrémité) est généralement réalisée au moyen d'un dispositif de mise à joint. Ce dispositif assure qu'une extrémité de l'élément de conduite à mettre à joint est positionnée par rapport à l'extrémité de la conduite fixe de telle manière que ces extrémités peuvent être reliées l'une à l'autre au moyen d'un joint soudé, une connexion par boulons ou par toute autre liaison mécanique par exemple.

De manière générale, dans le cas d'une pose en J, le dispositif de mise à joint présent sur le navire de pose comprend deux ensembles, un ensemble fixe et un ensemble mobile. L'ensemble fixe consiste en un collier de sustentation motorisé ou non permettant de maintenir la conduite sous-marine en cours de pose. Quant à l'ensemble mobile, il comprend l'élément de conduite à mettre à joint soutenu par un collier reprenant le poids propre de cet élément de conduite, ainsi que deux colliers montés sur des bras télescopiques qui sont fixés à des charnières solidaires de la tour de pose afin de permettre le réglage latéral de l'élément de conduite par activation de vérins dans le plan perpendiculaire à la conduite.

Un tel dispositif repose ainsi sur l'utilisation de colliers extérieurs aptes à être déplacés depuis une extrémité de conduite jusqu'au plan de mise à joint. On pourra ainsi se référer aux publications WO 2016 / 026969, WO 2018 / 002907, WO 2012 / 112863 et WO 2012/101232 qui décrivent différentes architectures de dispositif de mise à joint à colliers extérieurs positionnés de part et d'autre du plan de mise à joint.

Les dispositifs de mise à joint connus de l'art antérieur présentent un certain nombre d'inconvénients. En particulier, le recours à des colliers extérieurs de part et d'autre du plan de mise à joint nécessite un procédé de soudage manuel, l'espace requis pour la mise en place d'un système de soudage automatique n'étant pas suffisant. Or, outre la durée d'exécution d'un soudage manuel, la qualité de soudure n'est pas toujours obtenue. De plus, pour la même raison, de tels dispositifs de mise à joint ne permettent d'accueillir que des pièces d'extrémité PLET qui sont relativement compacts. En outre, pour des raisons de géométrie, ces dispositifs, ainsi que ceux ayant un mandrin transportable à l'intérieur de la conduite, ne sont pas adaptés à des conduites comprenant des coudes dont le rayon de courbure est important (typiquement de l'ordre de 5 fois le diamètre).

### Exposé de l'invention

La présente invention a donc pour but principal de proposer un dispositif de mise à joint qui ne présente pas les inconvénients précités.

Conformément à l'invention, ce but est atteint grâce à un dispositif de mise à joint d'éléments d'une conduite pour le transport de fluides, comprenant : une structure de support apte à être connectée à une structure de guidage et sur laquelle est destinée à être montée une section de conduite à mettre à joint à un élément de conduite ; deux rails fixes parallèles ; quatre platines comprenant chacune un premier élément apte à coopérer avec un rail et un second élément fixé sur la structure de support, le premier élément et le second élément de chaque platine étant reliés entre eux par un premier vérin aligné selon un premier axe de réglage perpendiculaire à un axe longitudinal de la section de conduite et un second vérin aligné selon un second axe de réglage perpendiculaire à l'axe longitudinal de la section de conduite et au premier axe de réglage ; et un système de commande des vérins des platines pour réaliser des déplacements selon le premier et le second axes de réglage et apte à coopérer conjointement avec un système de guidage en translation de la structure de support selon l'axe longitudinal de la section de conduite de façon à permettre une mise à joint de la section de conduite et de l'élément de conduite.

Le dispositif de mise à joint selon l'invention est remarquable en ce que le recours à quatre platines munie chacune de vérins selon deux axes de réglages perpendiculaires permet d'obtenir de nombreuses possibilités de combinaisons différentes de rotations et de translations de la structure de support afin de faciliter la mise à joint. Il en résulte une grande souplesse d'utilisation pour la mise à joint. Par ailleurs, le dispositif selon l'invention permet de disposer d'un espace suffisant pour réaliser un soudage automatique qui permet d'améliorer la qualité de soudure et sa durée d'exécution.

Le dispositif peut comprendre deux platines fixées d'un côté de la structure de support et coopérant chacune avec un même rail, et deux autres platines fixées d'un côté opposé de la structure de support et coopérant chacune avec l'autre rail, les platines situées d'un même côté de la structure de support étant espacées l'une de l'autre selon l'axe longitudinal de la section de conduite.

Dans ce cas, les platines situées de chaque côté de la structure de support sont avantageusement alignées deux à deux entre elles selon le premier axe de réglage.

Les vérins des platines peuvent être des vérins hydrauliques qui sont reliés à un système de commande hydraulique.

Le dispositif peut comprendre en outre un collier de support de tête sur lequel la structure de support de la section de conduite est destinée à être maintenue et destiné à reprendre l'effort engendré lors de la translation de la structure de support selon l'axe longitudinal de la section de conduite.

Le premier élément de chaque platine coopère avantageusement avec un rail par l'intermédiaire d'une pièce d'usure.

L'invention a également pour objet une tour de pose d'une conduite sous-marine pour le transport de fluides, comprenant un dispositif de mise à joint tel que défini précédemment.

L'invention a aussi pour objet un support d'ancrage à terre d'une conduite pour le transport de fluides, comprenant un dispositif de mise à joint tel que défini précédemment.

L'invention a encore pour objet un procédé de mise à joint d'éléments de conduite sous-marine pour le transport de fluides au moyen d'un dispositif de mise à joint de conduite tel que défini précédemment comprenant les étapes successives de :
a/ montage et verrouillage de la section de conduite à mettre à joint sur la structure de support du dispositif de mise à joint ;
b/ mise en position rétractée du premier vérin de chaque platine et déploiement en position intermédiaire du second vérin de chaque platine ;
c/ pivotement en position inclinée de la structure de support ;
d/ serrage du collier de support de tête sur une extension de la structure de support de la section de conduite et déverrouillage de la section de conduite à mettre à joint de la structure de support du dispositif de mise à joint ;
e/ engagement du premier élément de chaque platine dans un rail ;
f/ déploiement du premier vérin de chaque platine pour la mise en butée du premier élément de chaque platine dans le rail correspondant afin de stabiliser la section de conduite ; et
g/ commande des vérins des platines en coopération avec le guidage en translation de la structure de support selon l'axe longitudinal de la section de conduite pour réaliser la mise à joint d'un élément de conduite avec la section de conduite installée sur la structure de support.

De préférence, le procédé comprend en outre le verrouillage en position des vérins des platines une fois réalisée la mise au joint.

De préférence également, la commande des vérins des platines est synchronisée, d'une part pour les deux platines situées en partie supérieure de la structure de support, et d'autre part pour les deux platines situées en partie inférieure de la structure de support.

### Brève description des dessins

[Fig. 1] La figure 1 est une vue en perspective d'un dispositif de mise à joint selon l'invention.
[Fig. 2] La figure 2 est une vue de face du dispositif de la figure 1.

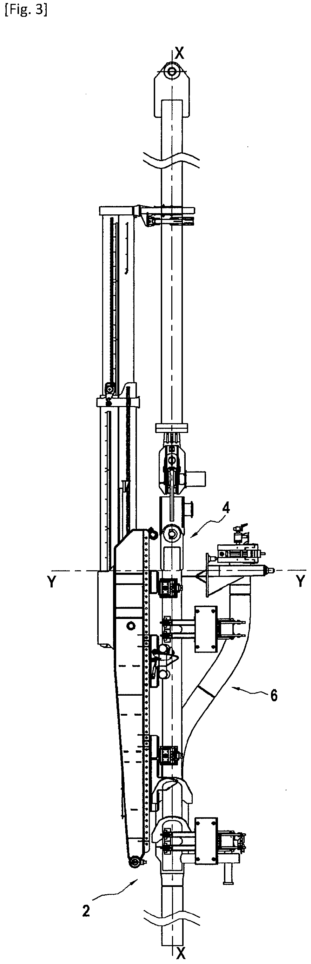

[Fig. 3] La figure 3 est une vue de côté du dispositif de la figure 1.
[Fig. 4] La figure 4 montre une platine du dispositif de la figure 1.
[Fig. 5A], [Fig. 5B] à [Fig. 13A], [Fig. 13B] Les figures 5A, 5B à 13A, 13B illustrent de façon schématique différentes possibilités de déplacements et de rotations du dispositif de la figure 1.

### Description des modes de réalisation

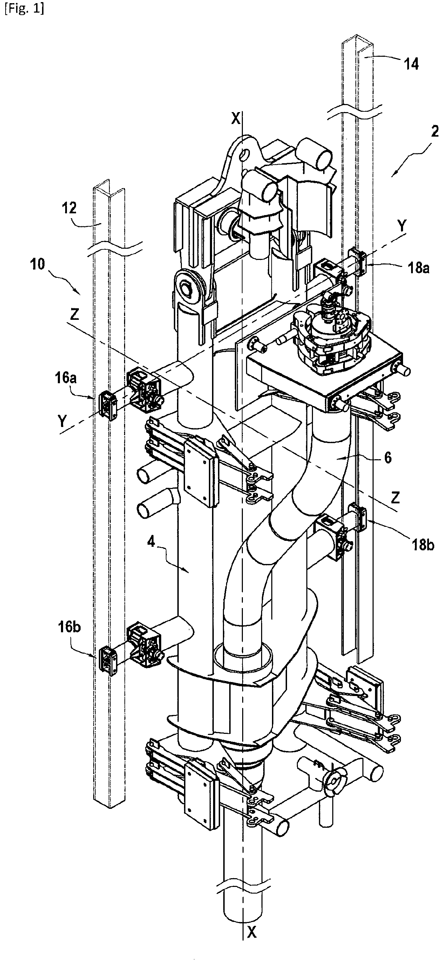

La figure 1 représente en perspective un dispositif de mise à joint 2 selon l'invention. Un tel dispositif peut être associé à une tour de pose (en J ou en S par exemple - non représentée sur les figures) d'un navire de pose d'une conduite sous-marine pour le transfert d'hydrocarbures, notamment de pétrole et de gaz.

Le dispositif de mise à joint 2 a pour fonction de permettre la mise à joint entre deux éléments d'une conduite sous-marine, par exemple entre une conduite en cours de pose et une section de conduite ou entre une conduite en cours de pose et une pièce en T destinée à munir la conduite sous-marine de branches latérales typiquement utilisées pour un raccordement futur à des équipements ou des têtes de puits, ou encore une conduite en cours de pose et une pièce d'extrémité qui termine la conduite sous-marine (PLET).

Le dispositif de mise à joint 2 selon l'invention comprend une structure de support 4 sur laquelle est montée la conduite sous-marine 6 à mettre à joint.

Le dispositif de mise à joint comprend également une structure de guidage 10 qui est principalement composée de deux rails fixes parallèles 12, 14. En pratique, ces rails 12, 14 de la structure de guidage sont des profilés métalliques à section en U qui sont montés sur la tour de pose de la conduite sous-marine. Dans une variante de réalisation non représentée sur les figures, les rails font partie de la structure de support 4 sur laquelle est montée la conduite 6.

Le dispositif de mise à joint selon l'invention comprend en outre un collier de support de tête (non représenté sur les figures) sur lequel la structure de support 4 de la conduite 6 est destinée à être maintenue. Ce collier de support de tête permet de reprendre l'effort engendré lors de la translation de la structure de support selon l'axe longitudinal X-X de la conduite.

A cet effet, le dispositif de mise à joint comprend encore un système de guidage (non représenté sur les figures) en translation de la structure de support 4 selon l'axe longitudinal X-X de la conduite. Ce système de guidage peut être formé d'un ensemble de vérins ou de tout autre dispositif connecté au collier de support de tête.

Par ailleurs, quatre platines permettent d'assurer un couplage de la structure de support 4 sur les deux rails 12, 14 de la structure de guidage ; à savoir deux platines 16a, 16b (par exemple une platine supérieure 16a et une platine inférieure 16b) fixées d'un même côté de la structure de support, espacées l'une de l'autre selon l'axe longitudinal X-X de la conduite et coopérant chacune avec un même rail 12 ; et deux autres platines 18a, 18b (par exemple une platine supérieure 18a et une platine inférieure 18b) fixées de l'autre côté de la structure de support, espacées l'une de l'autre selon l'axe longitudinal X-X de la conduite et coopérant chacune avec l'autre même rail 14.

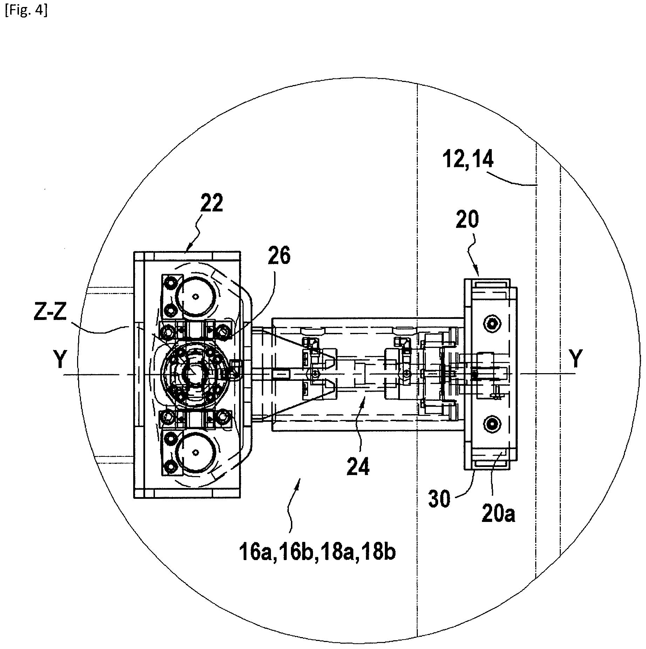

Comme illustré de façon plus précise par la figure 4, chaque platine 16a, 16b, 18a, 18b comprend un premier élément 20 qui est apte à coulisser dans un rail 12, 14 de la structure de guidage et un second élément 22 qui est fixé sur la structure de support 4.

Le premier élément 20 et le second élément 22 de chaque platine sont reliés entre eux par deux vérins distincts ; à savoir un premier vérin 24 aligné selon un premier axe de réglage Y-Y qui est perpendiculaire à l'axe longitudinal X-X de la conduite, et un second vérin 26 aligné selon un second axe de réglage Z-Z qui est perpendiculaire à l'axe longitudinal X-X de la conduite et au premier axe de réglage Y-Y.

De la sorte, l'axe longitudinal X-X de la conduite (sur lequel sont alignés les deux rails fixes 12, 14 de la structure de guidage), le premier axe de réglage Y-Y et le second axe de réglage Z-Z constituent les trois axes d'un référentiel du dispositif de mise à joint selon l'invention.

Comme représenté sur la figure 4, le premier élément 20 de chaque platine 16a, 16b, 18a, 18b coopère avec un rail 12, 14 de la structure de guidage par l'intermédiaire d'une pièce d'usure 30. Cette pièce d'usure 30 est interchangeable lorsqu'elle vient à être trop détériorée par les frottements répétés dans le rail correspondant.

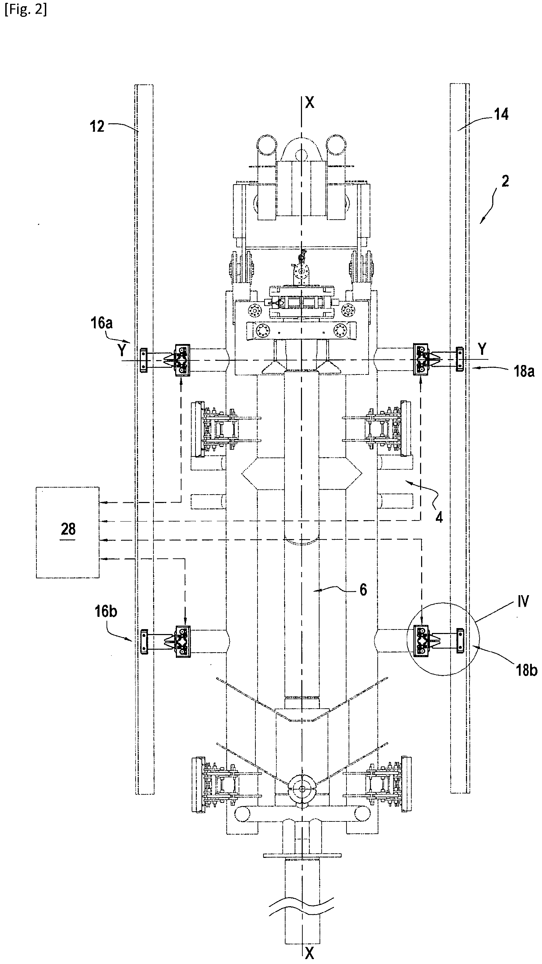

Les premiers et seconds vérins 24, 26 sont par exemple des vérins hydrauliques. Dans ce cas, ces vérins sont tous reliés à un système de commande hydraulique 28 (figure 2) permettant d'actionner chaque vérin afin de permettre la mise à joint de l'élément de conduite sur la conduite 6.

Plus précisément, le système de commande hydraulique 28 a pour fonction d'alimenter en fluide hydraulique les chambres de pilotage de chaque vérin 24, 26 afin d'obtenir les déplacements et les rotations de la structure de support 4 dans le référentiel défini par les axes X-X, Y-Y, Z-Z adéquats pour mettre à joint l'élément de conduite et la conduite.

De préférence, le système de commande 28 permet une commande par paire de platines, c'est-à-dire une commande synchronisée des vérins respectifs des platines, d'une part pour les deux platines 16a, 18a situées en partie supérieure de la structure de support, et d'autre part pour les deux platines 16b, 18b situées en partie inférieure de la structure de support.

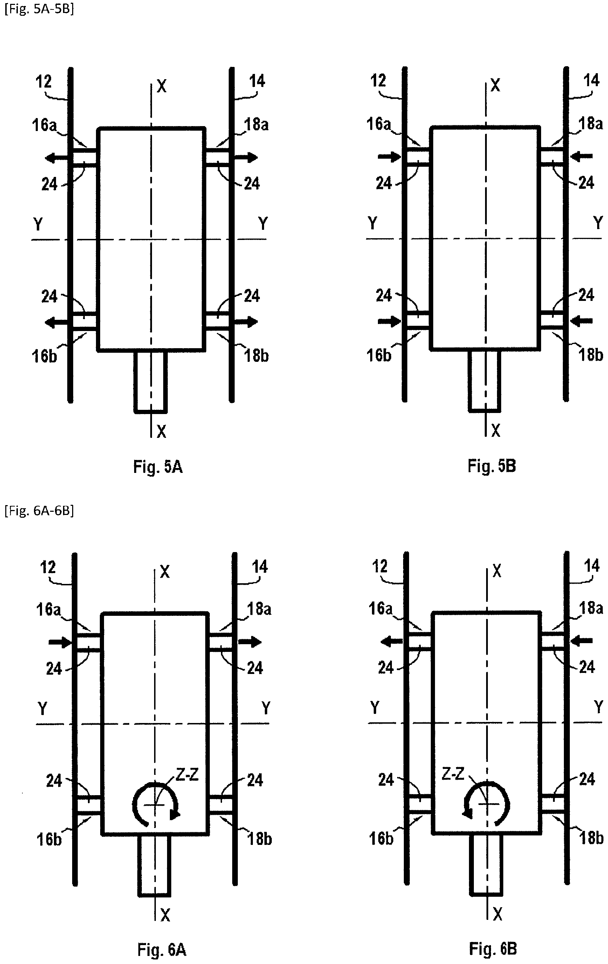

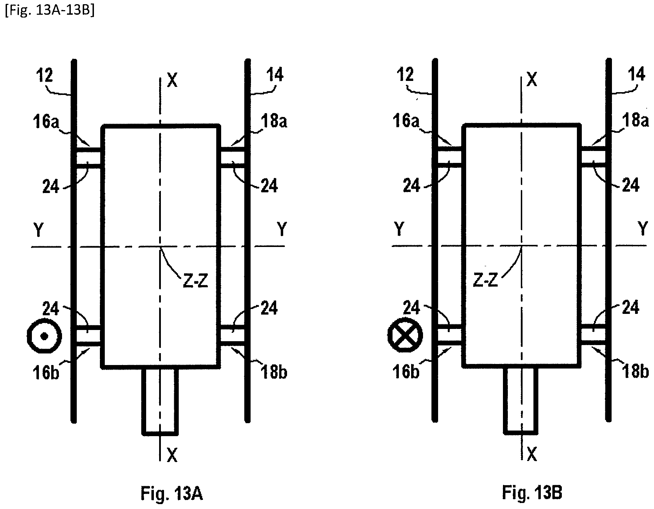

En liaison avec les figures 5A, 5B à 13A, 13B, on décrira maintenant les différentes possibilités de déplacements et rotations de la structure de support 4 dans le référentiel défini par les axes X-X, Y-Y, Z-Z.

Les figures 5A et 5B représentent, de façon schématique, des déplacements de la structure de support selon le premier axe de réglage Y-Y. Plus précisément, sur la figure 5A, tous les premiers vérins 24 sont déployés, tandis que sur la figure 5B, tous les premiers vérins 24 sont rétractés.

Les figures 6A et 6B représentent, de façon schématique, des rotations de la structure de support autour du second axe de réglage Z-Z. Plus précisément, sur la figure 6A, les platines 16b et 18b restent inactives, tandis que le premier vérin 24 de la platine 16a est rétracté et le premier vérin 24 de la platine opposée 18a est déployé, ce qui permet d'obtenir une rotation de la structure de support autour du second axe de réglage Z-Z dans le sens horaire.

A l'inverse, sur la figure 6B, les platines 16a et 18b restent toujours inactives, tandis que le premier vérin 24 de la platine 16a est déployé et le premier vérin 24 de la platine opposé 18a est rétracté, ce qui permet d'obtenir une rotation de la structure de support autour du second axe de réglage Z-Z dans le sens anti-horaire.

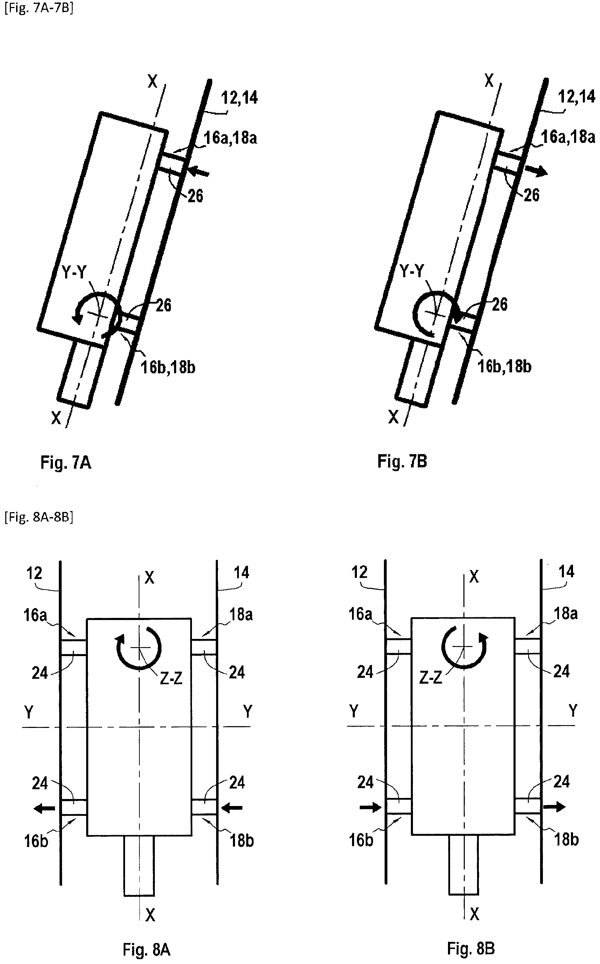

Sur l'exemple des figures 7A et 7B, il est possible d'obtenir une rotation de la structure de support autour du premier axe de réglage Y-Y. A cet effet, comme représenté sur ces figures, les platines 16b et 18b restent inactives. De plus, sur la figure 7A, les seconds vérins 26 des platines 16a et 18a sont déployés, ce qui permet d'obtenir une rotation de la structure de support autour du premier axe de réglage Y-Y dans le sens anti-horaire. Pour obtenir une rotation dans le sens horaire comme représenté sur la figure 7B, les seconds vérins 26 des platines 16a et 18a sont inversement rétractés.

Les figures 8A et 8B représentent, toujours de façon schématique, des rotations de la structure de support autour du second axe de réglage Z-Z inversées par rapport à celles des figures 6A et 6B.

Ainsi, sur ces figures, ce sont les platines 16a et 18a qui restent inactives. De plus, sur la figure 8A, le premier vérin 24 de la platine 16b est rétracté et le premier vérin 24 de la platine 18b est déployé, ce qui permet d'obtenir une rotation de la structure de support autour du second axe de réglage Z-Z dans le sens horaire. A l'inverse, sur la figure 8B, le premier vérin 24 de la platine 16b est déployé et le premier vérin 24 de la platine 18b est rétracté, ce qui permet d'obtenir une rotation de la structure de support autour du second axe de réglage Z-Z dans le sens anti-horaire.

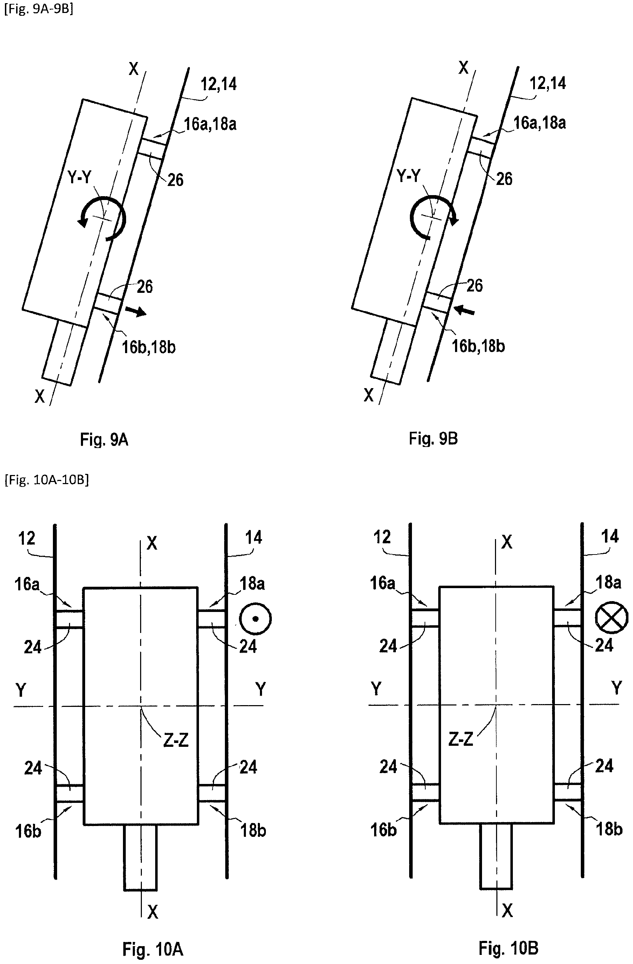

Les figures 9A et 9B représentent des rotations de la structure de support autour du premier axe de réglage Y-Y inversées par rapport à celles des figures 7A et 7B.

En effet, sur ces figures, ce sont les platines 16a et 18a qui restent inactives. De plus, sur la figure 9A, les seconds vérins 26 des platines 16b et 18b sont déployés de sorte à obtenir une rotation dans le sens anti-horaire de la structure de support autour du premier axe de réglage Y-Y. A l'inverse, sur la figure 9B, les seconds vérins 26 des platines 16b et 18b sont rétractés de sorte à obtenir une rotation dans le sens horaire de la structure de support autour du premier axe de réglage Y-Y.

Les figures 10A, 10B, 11A, 11B, 12A, 12B et 13A, 13B illustrent plusieurs mouvements pour compenser des écarts de course entre les différents vérins des platines, ces écarts de course pouvant être typiquement dus à des charges différentes sur les platines lors du chargement.

Ainsi, sur l'exemple des figures 10A et 10B, seul le second vérin de la platine 18a est actif (les autres vérins des autres platines restent inactifs). Sur l'exemple de la figure 10A, ce second vérin est déployé, tandis que sur l'exemple de la figure 10B il est rétracté.

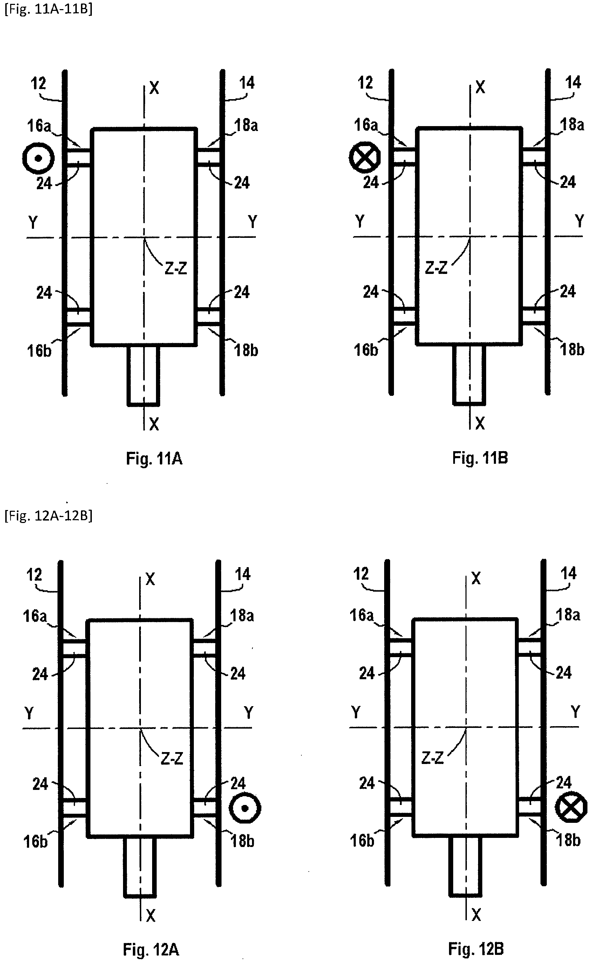

Sur l'exemple des figures 11A et 11B, seul le second vérin de la platine 16a est actif. Sur l'exemple de la figure 11A, ce second vérin est déployé, tandis que sur l'exemple de la figure 11B il est rétracté.

De même, sur l'exemple des figures 12A et 12B, seul le second vérin de la platine 18b est actif. Sur l'exemple de la figure 12A, ce second vérin est déployé, tandis que sur l'exemple de la figure 12B il est rétracté.

Enfin, sur l'exemple des figures 13A et 13B, seul le second vérin de la platine 16b est actif. Sur l'exemple de la figure 13A, ce second vérin est déployé, tandis que sur l'exemple de la figure 13B il est rétracté.

Ainsi, comme décrit précédemment, il est possible, grâce à une commande individualisée de chaque vérin de chaque platine du dispositif de mise à joint, d'obtenir une grande variété de déplacements et de rotation de la structure de support sur laquelle est montée la conduite à mettre à joint.

Le procédé de mise à joint d'éléments de conduite sous-marine sur une tour de pose en J au moyen d'un tel dispositif peut être le suivant.

Dans un premier temps, la structure de support 4 du dispositif de mise à joint est en position horizontale de façon à pouvoir y monter la conduite 6 à mettre à joint avec l'extrémité du support montée et serrée sur le collier de support de tête. Ensuite, le premier vérin 24 de chaque platine 16a, 16b, 18a et 18b est mis en position rétractée, tandis que le second vérin 26 de ces platines est déployé en position intermédiaire.

La structure de support est alors pivotée autour du premier axe de réglage Y-Y (comme représenté sur la figure 7A) pour passer d'une position horizontale à une position inclinée de la tour de pose. Le poids de la conduite est ainsi repris par le collier de support de tête.

Les rails 12, 14 de la structure de guidage du dispositif de mise à joint sont ensuite engagés autour de chaque platine 16a, 16b, 18a et 18b, et plus précisément autour des pièces d'usure 30 de ces derniers.

Tous les premiers vérins 24 des platines peuvent alors être déployés pour permettre une mise en butée des pièces d'usure 30 des platines dans les rails de façon à stabiliser la conduite vis-à-vis des mouvements du navire de pose.

Un opérateur procède alors au premier réglage selon une première direction (par exemple celle du second axe de réglage Z-Z) pour faire coïncider grossièrement l'axe longitudinal X-X de la conduite avec l'élément de conduite en attente à mettre à joint, puis l'opérateur procède selon le premier axe de réglage Y-Y. Ensuite, l'opérateur réitère ces réglages afin de parfaitement mettre à joint l'élément de conduite et la conduite.

Une fois la position validée par l'opérateur, les commandes hydrauliques des vérins des différentes platines sont verrouillées pour la durée de soudage.

## Revendications

1. Dispositif (2) de mise à joint d'éléments d'une conduite pour le transport de fluides, comprenant :
une structure de support (4) apte à être connectée à une structure de guidage et sur laquelle est destinée à être montée une section de conduite (6) à mettre à joint à un élément de conduite ;
deux rails (12, 14) fixes parallèles ;
quatre platines (16a, 16b, 18a, 18b) comprenant chacune un premier élément (20) apte à coopérer avec un rail et un second élément (22) fixé sur la structure de support,
**caractérisé en ce que** le premier élément et le second élément de chaque platine sont reliés entre eux par un premier vérin (24) aligné selon un premier axe de réglage (Y-Y) perpendiculaire à un axe longitudinal (X-X) de la section de conduite et un second vérin (26) aligné selon un second axe de réglage (Z-Z) perpendiculaire à l'axe longitudinal de la section de conduite et au premier axe de réglage (Y-Y) ; et
**en ce que** le dispositif comprend un système de commande (28) des vérins (24, 26) des platines pour réaliser des déplacements selon le premier et le second axes de réglage et apte à coopérer conjointement avec un système de guidage en translation de la structure de support selon l'axe longitudinal de la section de conduite de façon à permettre une mise à joint de la section de conduite et de l'élément de conduite.

2. Dispositif selon la revendication 1, comprenant deux platines (16a, 16b) fixées d'un côté de la structure de support et coopérant chacune avec un même rail (12), et deux autres platines (18a, 18b) fixées d'un côté opposé de la structure de support et coopérant chacune avec l'autre rail (14), les platines situées d'un même côté de la structure de support étant espacées l'une de l'autre selon l'axe longitudinal (X-X) de la section de conduite.

3. Dispositif selon la revendication 2, dans lequel les platines situées de chaque côté de la structure de support (4) sont alignées deux à deux entre elles selon le premier axe de réglage (Y-Y).

4. Dispositif selon l'une quelconque des revendications 1 à 3, dans lequel les vérins (24, 26) des platines sont des vérins hydrauliques qui sont reliés à un système de commande hydraulique (28).

5. Dispositif selon l'une quelconque des revendications 1 à 4, comprenant en outre un collier de support de tête sur lequel la structure de support (4) de la section de conduite (6) est destinée à être maintenue et destiné à reprendre l'effort engendré lors de la translation de la structure de support selon l'axe longitudinal de la section de conduite.

6. Dispositif selon l'une quelconque des revendications 1 à 5, dans lequel le premier élément (20) de chaque platine (16a, 16b, 18a, 18b) coopère avec un rail par l'intermédiaire d'une pièce d'usure (30).

7. Tour de pose d'une conduite sous-marine pour le transport de fluides, comprenant un dispositif (2) de mise à joint selon l'une quelconque des revendications 1 à 6.

8. Support d'ancrage à terre d'une conduite pour le transport de fluides, comprenant un dispositif (2) de mise à joint selon l'une quelconque des revendications 1 à 6.

9. Procédé de mise à joint d'éléments de conduite sous-marine pour le transport de fluides au moyen d'un dispositif de mise à joint selon l'une quelconque des revendications 1 à 6 comprenant les étapes successives de :
a/ montage et verrouillage de la section de conduite à mettre à joint sur la structure de support du dispositif de mise à joint ;
b/ mise en position rétractée du premier vérin de chaque platine et déploiement en position intermédiaire du second vérin de chaque platine ;
c/ pivotement en position inclinée de la structure de support ;
d/ serrage du collier de support de tête sur une extension de la structure de support (4) de la section de conduite et déverrouillage de la section de conduite à mettre à joint de la structure de support du dispositif de mise à joint ;
e/ engagement du premier élément de chaque platine dans un rail ;
f/ déploiement du premier vérin de chaque platine pour la mise en butée du premier élément de chaque platine dans le rail correspondant afin de stabiliser la section de conduite ; et
g/ commande des vérins des platines en coopération avec le guidage en translation de la structure de support selon l'axe longitudinal de la section de conduite pour réaliser la mise à joint d'un élément de conduite avec la section de conduite installée sur la structure de support.

10. Procédé selon la revendication 9, dans lequel l'étape de commande des vérins des platines comprend successivement le réglage de la structure de support selon le premier axe de réglage (Y-Y) de façon à faire coïncider l'axe longitudinal de la section de conduite montée sur ladite structure de support avec l'axe longitudinal de l'élément de conduite à mettre à joint, puis le réglage de la structure de support selon le second axe de réglage (Z-Z).

11. Procédé selon la revendication 10, comprenant en outre le verrouillage en position des vérins des platines une fois réalisée la mise au joint.

12. Procédé selon l'une quelconque des revendications 9 à 11, dans lequel la commande des vérins des platines est synchronisée, d'une part pour les deux platines (16a, 18a) situées en partie supérieure de la structure de support, et d'autre part pour les deux platines (16b, 18b) situées en partie inférieure de la structure de support.

## Patentansprüche

1. Vorrichtung (2) zum Verbinden von Elementen einer Leitung für den Transport von Fluiden, umfassend:
eine Tragstruktur (4), die geeignet ist, mit einer Führungsstruktur verbunden zu werden, und an der ein Leitungsabschnitt (6) angebracht werden soll, der mit einem Leitungselement zu verbinden ist,
zwei parallele feste Schienen (12, 14),
vier Platten (16a, 16b, 18a, 18b), die jeweils ein erstes Element (20), das geeignet ist, mit einer Schiene zusammenzuwirken, und ein zweites Element (22), das an der Tragstruktur befestigt ist, umfassen,
**dadurch gekennzeichnet, dass** das erste Element und das zweite Element einer jeden Platte durch einen ersten Zylinder (24), der entlang einer ersten Einstellachse (Y-Y) senkrecht zu einer Längsachse (X-X) des Leitungsabschnitts ausgerichtet ist, sowie durch einen zweiten Zylinder (26), der entlang einer zweiten Einstellachse (Z-Z) senkrecht zur Längsachse des Leitungsabschnitts und zu der ersten Einstellachse (Y-Y) ausgerichtet ist, untereinander verbunden sind, und
dass die Vorrichtung ein System zum Steuern (28) der Zylinder (24, 26) der Platten umfasst, um Bewegungen entlang der ersten und der zweiten Einstellachse auszuführen, und das in der Lage ist, gemeinsam mit einem System zum Verschiebeführen der Tragstruktur entlang der Längsachse des Leitungsabschnitts zusammenzuwirken, um ein Verbinden des Leitungsabschnitts und des Leitungselements zu ermöglichen.

2. Vorrichtung nach Anspruch 1, umfassend zwei Platten (16a, 16b), die auf einer Seite der Tragstruktur befestigt sind und jeweils mit einer gleichen Schiene (12) zusammenwirken, sowie zwei weitere Platten (18a, 18b), die auf einer gegenüberliegenden Seite der Tragstruktur befestigt sind und jeweils mit der anderen Schiene (14) zusammenwirken, wobei die Platten, die sich auf derselben Seite der Tragstruktur befinden, entlang der Längsachse (X-X) des Leitungsabschnitts voneinander beabstandet sind.

3. Vorrichtung nach Anspruch 2, bei der die auf jeder Seite der Tragstruktur (4) befindlichen Platten paarweise zueinander entlang der ersten Einstellachse (Y-Y) ausgerichtet sind.

4. Vorrichtung nach einem der Ansprüche 1 bis 3, bei der die Zylinder (24, 26) der Platten Hydraulikzylinder sind, die mit einem hydraulischen Steuersystem (28) verbunden sind.

5. Vorrichtung nach einem der Ansprüche 1 bis 4, ferner umfassend einen Kopfstützkragen, an dem die Tragstruktur (4) des Leitungsabschnitts (6) gehalten werden soll und der dazu bestimmt ist, die während der Translation der Tragstruktur entlang der Längsachse des Leitungsabschnitts erzeugte Kraft aufzunehmen.

6. Vorrichtung nach einem der Ansprüche 1 bis 5, bei der das erste Element (20) einer jeden Platte (16a, 16b, 18a, 18b) über ein Verschleißteil (30) mit einer Schiene zusammenwirkt.

7. Turm zum Verlegen einer Unterwasserleitung für den Transport von Fluiden, umfassend eine Vorrichtung (2) zum Verbinden nach einem der Ansprüche 1 bis 6.

8. Träger zur Bodenverankerung einer Leitung für den Transport von Fluiden, umfassend eine Vorrichtung (2) zum Verbinden nach einem der Ansprüche 1 bis 6.

9. Verfahren zum Verbinden von Elementen einer Unterwasserleitung für den Transport von Fluiden, mittels einer Verbindungsvorrichtung nach einem der Ansprüche 1 bis 6, umfassend die aufeinanderfolgenden Schritte des:
a/ Anbringens und Verriegelns des zu verbindenden Leitungsabschnitts an der Tragstruktur der Verbindungsvorrichtung,
b/ Bringens des ersten Zylinders einer jeden Platte in die zurückgezogene Position und des Ausfahrens des zweiten Zylinders einer jeden Platte in die Zwischenposition,
c/ Schwenkens der Tragstruktur in die geneigte Position,
d/ Festziehens des Kopfstützkragens an einer Verlängerung der Tragstruktur (4) des Leitungsabschnitts, und des Lösens des zu verbindenden Leitungsabschnitts von der Tragstruktur der Verbindungsvorrichtung,
e/ Einsteckens des ersten Elements einer jeden Platte in eine Schiene,
f/ Ausfahrens des ersten Zylinders einer jeden Platte für das In-Anlage-bringen des ersten Elements einer jeden Platte in der entsprechenden Schiene, um den Leitungsabschnitt zu stabilisieren, und
g/ Steuerns der Zylinder der Platten in Zusammenarbeit mit der Verschiebeführung der Tragstruktur entlang der Längsachse des Leitungsabschnitts, um die Verbindung eines Leitungselements mit dem an der Tragstruktur angebrachten Leitungsabschnitt zu vollziehen.

10. Verfahren nach Anspruch 9, bei dem der Schritt des Steuerns der Zylinder der Platten nacheinander das Einstellen der Tragstruktur entlang der ersten Einstellachse (Y-Y), um die Längsachse des an der Tragstruktur angebrachten Leitungsabschnitts mit der Längsachse des zu verbindenden Leitungselements zusammenfallen zu lassen, anschließend das Einstellen der Tragstruktur entlang der zweiten Einstellachse (Z-Z) umfasst.

11. Verfahren nach Anspruch 10, ferner umfassend das Verriegeln der Zylinder der Platten in Position, sobald das Verbinden vollzogen ist.

12. Verfahren nach einem der Ansprüche 9 bis 11, bei dem die Steuerung der Zylinder der Platten synchronisiert ist, einerseits für die beiden Platten (16a, 18a), die sich im oberen Teil der Tragstruktur befinden, und andererseits für die beiden Platten (16b, 18b), die sich im unteren Teil der Tragstruktur befinden.

## Claims

1. A device (2) for jointing elements of a pipeline for the transport of fluids, comprising:
a support structure (4) capable of being connected to a guide structure and on which a pipeline section (6) to be jointed to a pipeline element is intended to be mounted;
two parallel fixed rails (12, 14);
four plates (16a, 16b, 18a, 18b) each comprising a first element (20) capable of cooperating with a rail and a second element (22) fixed on the support structure,
**characterized in that** the first element and the second element of each plate are linked together by a first cylinder (24) aligned along a first adjustment axis (YY) perpendicular to a longitudinal axis (XX) of the pipeline section and a second cylinder (26) aligned along a second adjustment axis (ZZ) perpendicular to the longitudinal axis of the pipeline section and to the first adjustment axis (YY); and
**in that** the device comprises
a system for controlling (28) the cylinders (24, 26) of the plates to achieve movements along the first and the second adjustment axis and capable of cooperating jointly with a system for guiding in translation the support structure along the longitudinal axis of the pipeline section so as to allow jointing of the pipeline section and of the pipeline element.

2. The device according to claim 1, comprising two plates (16a, 16b) fixed on one side of the support structure and each cooperating with a same rail (12), and two other plates (18a, 18b) fixed on an opposite side of the support structure and each cooperating with the other rail (14), the plates located on the same side of the support structure being spaced from each other along the longitudinal axis (XX) of the pipeline section.

3. The device according to claim 2, wherein the plates located on either side of the support structure (4) are aligned in pairs with each other along the first adjustment axis (YY).

4. The device according to any one of claims 1 to 3, wherein the cylinders (24, 26) of the plates are hydraulic cylinders which are linked to a hydraulic control system (28).

5. The device according to any one of claims 1 to 4, further comprising a head support collar on which the support structure (4) of the pipeline section (6) is intended to be held and intended to take up the force generated during the translation of the support structure along the longitudinal axis of the pipeline section.

6. The device according to any one of claims 1 to 5, wherein the first element (20) of each plate (16a, 16b, 18a, 18b) cooperates with a rail via a wear part (30).

7. A tower for laying a subsea pipeline for the transport of fluids, comprising a jointing device (2) according to any one of claims 1 to 6.

8. A support for anchoring to the ground a pipeline for the transport of fluids, comprising a jointing device (2) according to any one of claims 1 to 6.

9. A method for jointing subsea pipeline elements for the transport of fluids by means of a jointing device according to any one of claims 1 to 6 comprising the successive steps of:
a/ mounting and locking the pipeline section to be jointed on the support structure of the jointing device;
b/ placing the first cylinder of each plate in the retracted position and deploying the second cylinder of each plate in the intermediate position;
c/ pivoting the support structure in the inclined position;
d/ clamping the head support collar on an extension of the support structure (4) of the pipeline section and unlocking the pipeline section to be jointed from the support structure of the jointing device;
e/ engaging the first element of each plate in a rail;
f/ deploying the first cylinder of each plate to put the first element of each plate into abutment in the corresponding rail in order to stabilize the pipeline section; and
g/ controlling the cylinders of the plates in cooperation with the translational guidance of the support structure along the longitudinal axis of the pipeline section to perform jointing of a pipeline element with the pipeline section installed on the support structure.

10. The method according to claim 9, wherein the step of
controlling the cylinders of the plates successively comprises the adjustment of the support structure along the first adjustment axis (YY) so as to make the longitudinal axis of the pipeline section mounted on said support structure coincide with the longitudinal axis of the pipeline element to be jointed, then the adjustment of the support structure according to the second adjustment axis (ZZ).

11. The method according to claim 10, further comprising the locking in position of the cylinders of the plates once the jointing has been performed.

12. Method according to any one of claims 9 to 11, wherein the control of the cylinders of the plates is synchronized, on the one hand for the two plates (16a, 18a) located in the upper portion of the support structure, and on the other hand for the two plates (16b, 18b) located in the lower portion of the support structure.
